# EUROPEAN PATENT APPLICATION

(11) **EP 1 610 497 A1**
(43) Date of publication of application: **28.12.2005**
(21) Application number: 05013268.7
(22) Date of filing: 20.06.2005
(51) Int. Cl.: H04L 12/28

(54) **System and method for allocating safety channels in a broadband wireless access communication system**

(30) Priority: 19.06.2004 KR 2004045891
(71) Applicant: SAMSUNG ELECTRONICS CO., LTD., Suwon-si, Gyeonggi-do (KR)
(72) Inventor: Kang, Hyun-Jeong, c/o Samsung El. Co., Ltd., Suwon-si Gyeonggi-do (KR); Koo, Chang-Hoi, c/o Samsung El. Co., Ltd., Suwon-si Gyeonggi-do (KR); Son, Jung-Je, c/o Samsung El. Co., Ltd., Suwon-si Gyeonggi-do (KR); Lim, Hyoung-Kyu, c/o Samsung El. Co., Ltd., Suwon-si Gyeonggi-do (KR); Son, Yeong-Moon, c/o Samsung El. Co., Ltd., Suwon-si Gyeonggi-do (KR); Kim, So-Hyun, c/o Samsung El. Co., Ltd., Suwon-si Gyeonggi-do (KR); Lee, Sung-Jin, c/o Samsung El. Co., Ltd., Suwon-si Gyeonggi-do (KR)
(74) Representative: Grünecker, Kinkeldey, Stockmair & Schwanhäusser Anwaltssozietät

(57) **Abstract**

A system and method for allocating a safety channel in a broadband wireless access (BWA) communication system including a serving base station (BS) for providing a service to a mobile station (MS) and neighbor BSs. Upon receiving a request for allocation of the safety channel from the MS, the serving BS sends a request for allocation of the safety channel to a target BS having the best channel condition among the neighbor BSs. Upon receiving information indicating possibility of allocating the safety channel from the target BS, the serving BS controls the MS such that the MS performs communication through the allocated safety channel. Upon detecting a need for receiving a safety channel, the MS sends, to the serving BS, information indicating that the MS should be allocated the safety channel, and receives a safety channel allocated according to a control signal from the serving BS.

## Description

### BACKGROUND OF THE INVENTION

### 1. Field of the Invention

The present invention relates generally to a Broadband Wireless Access (BWA) communication system, and in particular, to a system and method for allocating safety channels and performing handover for allocation of the safety channels.

### 2. Description of the Related Art

Research into the next generation communication system, also known as the 4^{th} (4G) generation communication system, is being actively pursued to provide users with various Qualities-of-Service (QoSs) at a data rate of about 100 Mbps. In general, the current 3^{rd} generation (3G) communication system supports a data rate of about 384 Kbps in an outdoor channel environment with relatively poor channel conditions, and supports a data rate of 2 Mbps at most indoor channel environments with relatively good channel conditions.

A wireless Local Area Network (LAN) system and a wireless Metropolitan Area Network (MAN) system generally support a data rate of 20 to 50 Mbps. At present, the 4G communication system is being actively developed to create a new communication system capable of supporting mobility and QoS in the wireless LAN and MAN systems, both of which guarantee a relatively high data rate.

In particular, the Institute of Electrical and Electronics Engineers (IEEE) 802.16 communication system is communication system employing an Orthogonal Frequency Division Multiplexing (OFDM) scheme and an Orthogonal Frequency Division Multiple Access (OFDMA) scheme to support a broadband transmission network to physical channels in the wireless MAN.

The IEEE 802.16 communication system is a BWA communication system using an OFDMA scheme. The IEEE 802.16 communication system, which is a wireless MAN system employing the OFDMA scheme, transmits a physical channel signal using a plurality of subcarriers, thereby enabling highspeed data transmission.

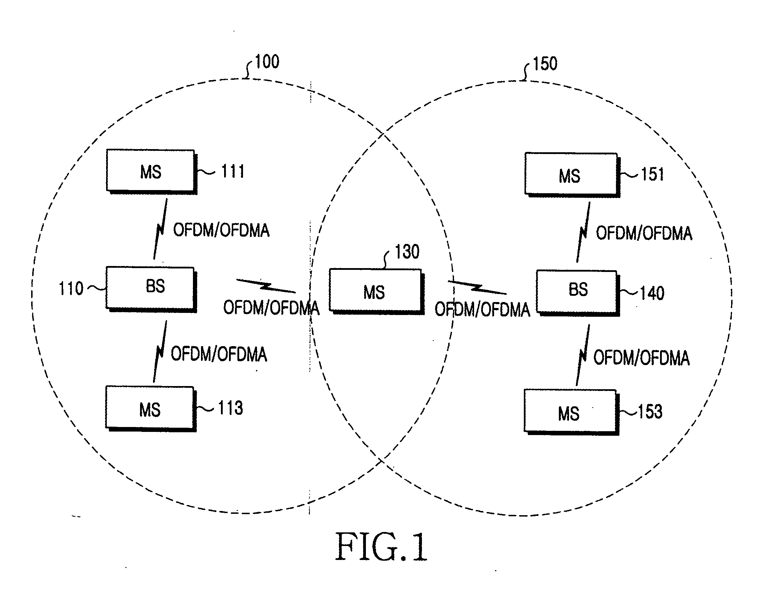

FIG. 1 is a diagram illustrating a configuration of a general BWA communication system. Referring to FIG. 1, the BWA communication system has a multicell geometry, i.e., has a cell 100 and a cell 150, and includes a base station (BS) 110 managing the cell 100, a BS 140 managing the cell 150, and a plurality of mobile stations (MSs) 111, 113, 130, 151 and 153. Signal exchange between the base stations 110 and 140 and the MSs 111, 113, 130, 151 and 153 is achieved using the OFDM/OFDMA scheme. Among the MSs 111, 113, 130, 151 and 153, the MS 130 is located in a boundary region of the cell 100 and the cell 150, i.e., a handover region. To support mobility for the MS 130, it is necessary to support handover for the MS 130.

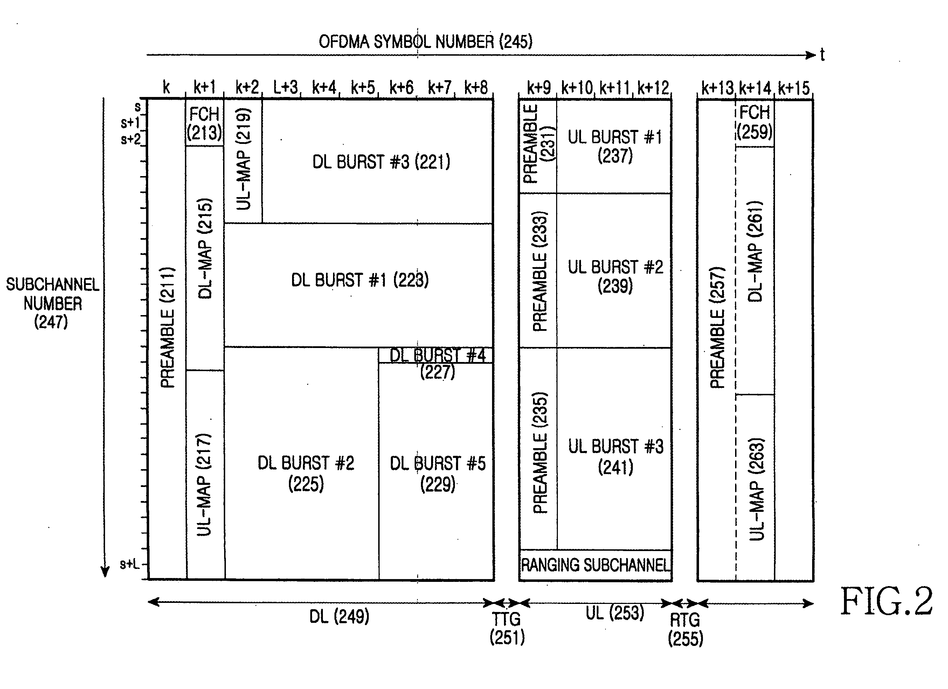

FIG. 2 is a diagram illustrating a frame structure in a general BWA communication system. Referring to FIG. 2, a horizontal axis 245 represents OFDMA symbol numbers, and a vertical axis 247 represents subchannel numbers. As illustrated in FIG. 2, one OFDMA frame includes a plurality of, for example, 13 OFDMA symbols. In addition, one OFDMA symbol includes a plurality of subchannels, for example, (L+1) subchannels. The BWA communication system aims at acquiring a frequency diversity gain by dispersing all of the subcarriers used therein, especially, data subcarriers over the full frequency band. The BWA communication system performs a ranging operation to adjust a time offset and a frequency offset for a transmission/reception period and to adjust transmission power.

In the BWA communication system, a transition from a downlink to an uplink is made for a Transmit/receive Transition Gap (TTG) 251, and a transition from an uplink to a downlink is made for a Receive/transmit Transition Gap (RTG) 255. Following the TTG 251 and the RTG 255, separate preamble fields 211, 231, 233 and 235 are allocated for acquisition of synchronization between a transmitter and a receiver.

In the preamble structure of the IEEE 802.16d communication system, a downlink (DL) frame 249 includes a preamble field 211, a frame control header (FCH) field 213, a DL-MAP field 215, UL-MAP fields 217 and 219, and DL burst fields, i.e., a DL burst #1 field 223, a DL burst #2 field 225, a DL burst #3 field 221, a DL burst #4 field 227, and a DL burst #5 field 229.

The preamble field 211 transmits a sync signal, i.e., a preamble sequence, for acquisition of synchronization between a transmitter and a receiver. The FCH field 213, including two subchannels, transmits basic information on the subchannel, ranging, modulation scheme, etc. The DL-MAP field 215 transmits a DL-MAP message, and UL-MAP fields 217 and 219 transmit UL-MAP messages.

In a multicell broadband OFDMA communication system, MSs located in neighbor cells communicate using the same frequency band. Therefore, if the MSs are located in a cell boundary, the same subchannels used in different cells may create considerable interference with each other. Thus, the MSs located in the cell boundary are allocated a frequency band that is not used in the neighbor cells. Safety channels are allocated to increase cell capacity by minimizing interference from the neighbor cells, guarantee QoS of the MSs located in the cell boundary, and minimize interference from the neighbor cells.

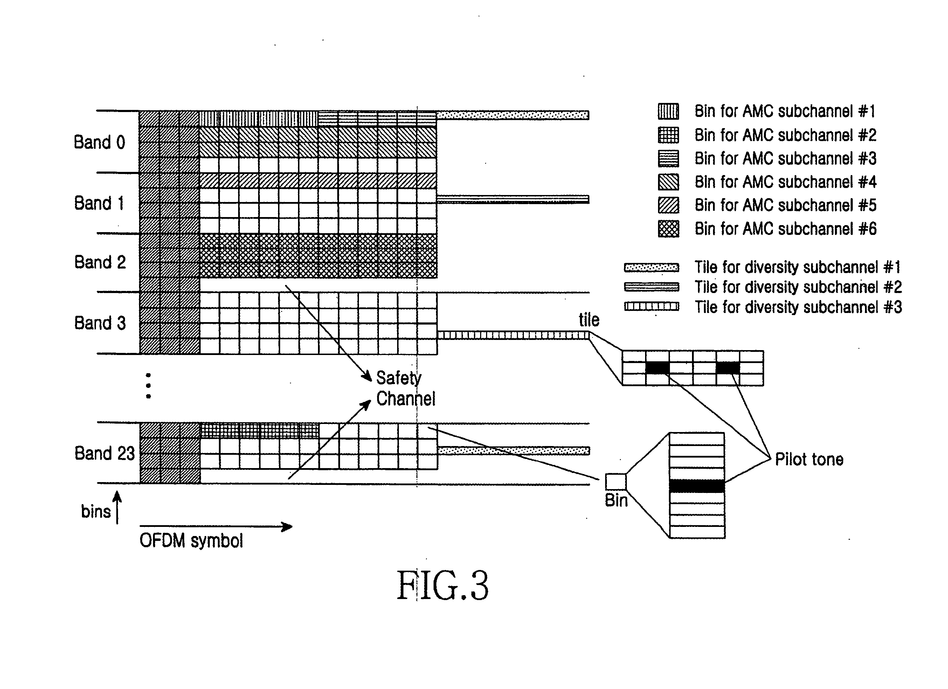

FIG. 3 is a diagram illustrating a frame structure to which safety channels are applied in a general BWA communication system. In the frame structure of FIG 3, a full subcarrier band is divided into a plurality of bands, and each band includes a plurality of bins or tiles. Each of the bins or tiles includes a plurality of subcarriers. The bin includes successive subcarriers within one OFDM symbol, and there are pilot tones and data tones. The tile includes successive subcarriers, and there are pilot tones and data tones.

In the frame, first three OFDM symbols are used for a ranging channel, a Hybrid Automatic Repeat Request (H-ARQ) channel, and a Channel Quality Information (CQI) channel, respectively. The remaining band Adaptive Modulation and Coding (AMC) channels, diversity channels, and safety channels are allocated. Therefore, data including MAP or control information is distributed at the head of each frame, and data including subcarriers and OFDM symbols is distributed at the end of each frame.

The band AMC channels at the head of the frame are allocated in units of band comprised of bins, and the diversity channels at the end of the frame are allocated in units of subchannel comprised of three tiles dispersed over the full subcarrier band. Because the band AMC channels are allocated the wider band as compared with the diversity channels, they can be used for transmitting/receiving a large volume of data at high speed by applying a modulation technique with a high coding efficiency for the high reception quality.

The safety channels are allocated a part crossing all of OFDM symbols and one bin. The safety channels are allocated all symbols for one bin. MSs are allocated safety channels with a frequency band allocable in a BS among the safety channels unused in neighbor cells, i.e., the remaining unallocated frequency band. A MS using the band AMC channels is allocated resources in units of band, and a MS using the diversity channels is allocated resources in units of subchannel. The MS using the safety channels is allocated all of the symbols for one bin. The allocated safety channels are selected from the safety channels unused by the MS in neighbor cells.

In the BWA communication system, a MS that is communicating with a BS in a serving cell may move to a neighbor cell region. If interference from a BS in the neighbor cell increases, the MS is allocated channels corresponding to the safety channels of the neighbor cell, currently unused therein, so that it can continue safety communication with the serving BS. When the safety channels of the neighbor cell are allocated to another MS, the MS located in the vicinity of the neighbor cell still suffers considerable interference from the BS in the neighbor cell.

### SUMMARY OF THE INVENTION

It is, therefore, an object of the present invention to provide a system and method for allocating safety channels in a Broadband Wireless Access (BWA) communication system.

It is another object of the present invention to provide a system and method for allocating safety channels according to channel allocation of a neighbor cell in a BWA communication system.

It is further another object of the present invention to provide a system and method for allocating a safety channel zone of a neighbor cell to minimize interference with a mobile station (MS) that has moved to a boundary of the neighbor cell in a BWA communication system.

It is yet another object of the present invention to provide a system and method in which the serving BS allocates its own safety channel zone to the MS when a serving base station (BS) cannot allocate a channel zone corresponding to a safety channel zone of a neighbor cell to an MS,.

It is still another object of the present invention to provide a system and method in which a serving BS allows an MS to perform handover to a neighbor BS having the highest signal reception intensity to allocate its own safety channel zone to an MS.

It is still another object of the present invention to provide a system and method in which the serving BS allocates a safety channel zone of a neighbor BS having the second highest reception signal intensity to the MS when a serving BS cannot allocate a channel zone corresponding to a safety channel zone of a neighbor cell to an MS.

According to one aspect of the present invention, there is provided a method for allocating a safety channel in a broadband wireless access (BWA) communication system including a serving base station (BS) for providing a service to a mobile station (MS) and neighbor BSs, The method includes upon receiving a request for allocation of the safety channel from the MS, sending a request for allocation of the safety channel to a target BS having the best channel condition among the neighbor BSs; and after sending the request for allocation of the safety channel, upon receiving information indicating that the safety channel can be allocated, controlling the MS to perform communication through the allocated safety channel.

According to another aspect of the present invention, there is provided a method for allocating a safety channel in a broadband wireless access (BWA) communication system including a serving base station (BS) for providing a service to a mobile station (MS) and neighbor BSs, The method includes upon receiving a request for allocation of the safety channel from the MS, sending a request for allocation of the safety channel to a target BS having the best channel condition among the neighbor BSs; and after sending the request for allocation of the safety channel, upon receiving information indicating that the safety channel cannot be allocated, controlling the MS to perform handover from the serving BS to the target BS.

According to further another aspect of the present invention, there is provided a system for allocating a safety channel in a broadband wireless access (BWA) communication system including a serving base station (BS) for providing a service to a mobile station (MS) and neighbor BSs. The system includes the serving BS for, upon receiving a request for allocation of the safety channel from the MS, sending a request for allocation of the safety channel to a target BS having the best channel condition among the neighbor BSs, and upon receiving information indicating possibility of allocating the safety channel from the target BS, controlling the MS to perform communication through the allocated safety channel; and the MS for, upon detecting a need for receiving a safety channel, sending, to the serving BS, information indicating that the MS should be allocated the safety channel, and receiving a safety channel allocated according to a control signal from the serving BS.

According to further another aspect of the present invention, there is provided a system for allocating a safety channel in a broadband wireless access (BWA) communication system including a serving base station (BS) for providing a service to a mobile subscriber station (MS) and neighbor BSs The system includes the serving BS for, upon receiving a request for allocation of the safety channel from the MS, sending a request for allocation of the safety channel to a target BS having the best channel condition among the neighbor BSs, and upon receiving information indicating impossibility of allocating the safety channel from the target BS, controlling the MSS to perform handover to the target BS; and the MS for, upon detecting a need for receiving the safety channel, sending, to the serving BS, information indicating that the MS should be allocated the safety channel, and performing handover from the serving BS to the target BS according to a control signal from the serving BS to receive an allocated safety channel.

### BRIEF DESCRIPTION OF THE DRAWINGS

The above and other objects, features and advantages of the present invention will become more apparent from the following detailed description when taken in conjunction with the accompanying drawings in which:
FIG. 1 is a diagram illustrating a configuration of a general BWA communication system;
FIG. 2 is a diagram illustrating a frame structure in a general BWA communication system;
FIG. 3 is a diagram illustrating a frame structure to which safety channels are applied in a general BWA communication system;
FIG. 4 is a signaling diagram illustrating an operating process of allocating safety channels in a BWA communication system according to an embodiment of the present invention;
FIG. 5 is a signaling diagram illustrating an operating process of allocating safety channels by performing handover in a BWA communication system according to an embodiment of the present invention;
FIG. 6 is a flowchart illustrating an operating process of an MS for allocating safety channels in a BWA communication system according to an embodiment of the present invention;
FIG. 7 is a flowchart illustrating an operating process of a serving BS for allocating safety channels in a BWA communication system according to an embodiment of the present invention;
FIG. 8 is a flowchart illustrating an operating process of a neighbor BS for allocating safety channels in a BWA communication system according to an embodiment of the present invention;
FIG. 9 is a signaling diagram illustrating an operating process of allocating safety channels in a BWA communication system according to an alternative embodiment of the present invention; and
FIG. 10 is a flowchart illustrating an operating process of an MS for allocating safety channels in a BWA communication system according to an alternative embodiment of the present invention;
FIG. 11 is a flowchart illustrating an operating process of a serving BS for allocating safety channels in a BWA communication system according to an alternative embodiment of the present invention;
FIG. 12 is a flowchart illustrating an operating process of a neighbor BS for allocating safety channels in a BWA communication system according to an alternative embodiment of the present invention; and
FIG 13 is a signaling diagram illustrating an operating process of allocating safety channels in a BWA communication system according to further an alternative embodiment of the present invention.

### DETAILED DESCRIPTION OF THE PREFERRED EMBODIMENT

Several preferred embodiments of the present invention will now be described in detail with reference to the annexed drawings. In the following description, a detailed description of known functions and configurations incorporated herein has been omitted for conciseness.

The present invention proposes a scheme for preventing deterioration of a current serving cell signal quality from an increase interference intensity from a base station (BS) in a neighbor cell when a mobile station (MS) approaches coverage of the neighbor cell in a Broadband Wireless Access (BWA) communication system. That is, the present invention proposes a scheme for allocating the unused neighbor cell channels, i.e., safety channels, to a MS to reduce interference from the neighbor cell.

In addition, the present invention proposes a scheme in which, upon failure to allocate safety channels of a neighbor cell, a serving BS allows the MS to perform handover to the neighbor cell and use its own safety channels in the neighbor cell. Further, the present invention proposes a scheme for allocating channels corresponding to a neighbor cell safety channel zone having the second highest reception signal intensity, upon failure to allocate safety channels of a neighbor cell having the highest reception signal intensity.

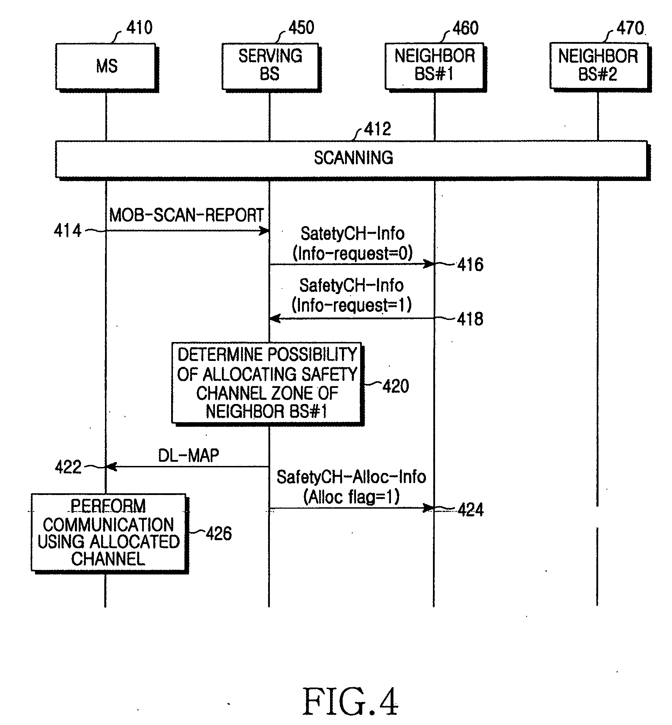

FIG. 4 is a signaling diagram illustrating an operating process of allocating safety channels in a BWA communication system according to an embodiment of the present invention. Referring to FIG. 4, in the BWA communication system, a MS measures a change in intensity of signals received from a neighbor cell, and sends a request for allocation of safety channels to its serving BS according to the measurement result. Then the serving BS allocates the safety channels as channels between the MS and the neighbor cell having the highest reception signal intensity.

In step 412, a MS 410, while communicating with a serving BS 450 in a serving cell, performs scanning on its neighbor BSs including the serving BS 450, a neighbor BS#1 460 and a neighbor BS#2 470. In step 414, if there is any change in intensity of signals received from the serving BS and the neighbor BSs as a result of the scanning, the MS 410 transmits the scanning result to the serving BS 450 using a "MOB-SCAN-REPORT message". The format of the MOB-SCAN-REPORT message is shown in Table 1.

**Table 1**

| Syntax | Size | Notes |
|---|---|---|
| MOB-SCAN-REPORT_Message_Format() { | | |
| Management Message Type = ?? | 8 bits | |
| Report Mode | 2 bits | 00: Event-triggered 01-11: reserved |
| N_NEIGHBORS | 8 bits | N_NEIGHBORS contains Serving BS |
| For(i=0; i<N_NEIGHBORS; i++) | | |
| Neighbor BS-ID | 48 bits | |
| BS CINR means | 8 bits | |
| } | | |
| } | | |

As shown in Table 1, the MOB-SCAN-REPORT message includes a plurality of information elements (IEs), i.e., a "Management Message Type" indicating a type of a transmission message, a "Report Mode" indicating transmission of the MOB-SCAN-REPORT message to report occurrence of a particular event to the serving BS, and an "N_NEIGHBORS" indicating the scanning result for BSs by the MS 410. The N_NEIGHBORS includes a Neighbor BS-ID indicating IDs of the neighbor BSs and a BS CINR mean indicating intensities of signals received from BSs. The N_NEIGHBORS includes not only the neighbor BSs but also the serving BS.

In step 416, upon receiving the MOB-SCAN-REPORT message, the serving BS 450 selects a neighbor BS having the highest reception signal intensity using the MOB-SCAN-REPORT message. The serving BS 450 transmits a "SafetyCH-Info" message after setting an Info-request to '0' to send a request for allocable safety channel information to a neighbor BS. If it is assumed in step 416 that the neighbor BS#1 460 has the highest reception signal intensity, the serving BS 450 transmits the SafetyCH-Info message with the Info-request='0' to the neighbor BS#1 460. A format of the SafetyCH-Info message is shown in Table 2.

**Table 2**

| Syntax | Size | Notes |
|---|---|---|
| Global Header | 152 bits | |
| Info-request | 1 bit | 0: Request safety channel allocation information 1: Inform safety channel allocation information |
| TLV_Safety_channel | _info Variable | Safety channel zone information for case where Info-request value is set to 1. |

As shown in Table 2, the SafetyCH-Info message includes a plurality of IEs, i.e., an "Info-request" indicating that one BS sends a request for allocable safety channel information to another BS, or indicating whether one BS informs another BS of its own safety channels, and a "TLV_Safety_channel_info" indicating the safety channel information. The "TLV_Safety_channel_info" is used when a BS informs another BS of its own safety channels for the case where the Info-request value is set to '1'. The format for the TLV_Safety_channel_info is shown in Table 3.

**Table 3**

| TLV_Safety_channel_info() { | Size | Notes |
|---|---|---|
| OFDM symbol offset | 8 bits | |
| Subchannel offset | 7 bits | |
| No. OFDMA symbols | 7 bits | |
| No. subchannels | 7 bits | |
| } | | |

As shown in Table 3, the TLV_Safety_channel_info includes an "OFDMA symbol offset" indicating an OFDMA symbol offset for safety channels allocable to the MS 410, a "Subchannel offset" indicating a subchannel offset for a safety channel zone, a "No. OFDMA symbols" indicating the number of OFDMA symbols, and a "No. subchannels" indicating the number of subchannels.

In step 416, the neighbor BS#1 460 receives a safety channel information request from the serving BS 450. In step 418, the neighbor BS#1 460 transmits, to the serving BS 450, a "SafetyCH-Info" message including TLV_Safety_channel_info indicating allocable channels among its own safety channels and an Info-request being set to '1'. In step 420, upon receiving the SafetyCH-Info message with Info-request='1', the serving BS 450 determines whether it can allocate its own safety channels included in the SafetyCH-Info message to the MS 410. If it is determined that the serving BS 450 can allocate the safety channels provided by the neighbor BS#1 460, the serving BS 450 transmits a DL-MAP message including information on a selected channel to the MS 410 in step 422. The format for the DL-MAP message is shown in Table 4.

**Table 4**

| **Syntax** | **Size** | **Notes** |
|---|---|---|
| DL-MAP_Message Format() { | | |
| **Management Message Type = 2** | 8bits | |
| **PHY Synchronization Field** | *Variable* | See appropriate PHY specification |
| **DCD Count** | 8bits | |
| **Base Station ID** | 48bits | |
| Begin PHY Specific Section { | | See applicable PHY section |
| for(i=1; i<=n,i++){ | | For each DL-MAP element 1 to n. |
| DL-MAP IE() | Variable | See corresponding PHY Specification |
| } | | |
| } | | |
| if!(byte boundary){ | | |
| **Padding Nibble** | 4bits | Padding to reach byte boundary. |
| } | | |
| } | | |

As shown in Table 4, the DL-MAP message includes a plurality of IEs, i.e., a "Management Message Type" indicating a type of a transmission message, a Physical (PHY) Synchronization that is set according to a modulation scheme and a demodulation scheme applied to a physical channel for sync acquisition, a "DCD count" indicating a count corresponding to a change in configuration of a downlink channel descript (DCD) message including a downlink burst profile, a "Base Station ID" indicating a base station identifier, and a "DL-MAP_IE" indicating burst information of DL-MAP IEs. The format for the DL-MAP_IE is shown in Table 5.

**Table 5**

| Syntax | Size | Notes |
|---|---|---|
| DL-MAP IE(){ | | |
| DIUC | 4 bits | |
| if(DIUC=15){ | | |
| Extended DIUC dependent IE | *Variable* | See clauses following 8.4.5.3.1 |
| } else{ | | |
| if(INC_CID==1){ | | The DL-MAP starts with INC_CID=0. INC_CID is toggled Between 0 and 1 by the CID-SWITCH IE()(8.4.5.3.1) |
| N_CID | 8 bits | Number of CIDs assigned for this IE |
| for(n=0; n<N_CID;n++){ | | |
| CID | 16 bits | |
| } | | |
| } | | |
| OFDMA Symbol offset | 8 bits | |
| **Subchannel offset** | 6 bits | |
| **Boosting** | 3 bits | 000: normal(not boosted); 001: +6dB; 010: -6dB; 011: +9dB; 100: +3dB; 101: -3dB; 110: -9dB; 111: -12dB; |
| No. OFDMA Symbols | 7 bits | |
| **No. Subchannels** | 6 bits | |
| **Repetition Coding Indication** | 2 bits | Ob00 - No repetition coding 0b01 - Repetition coding of 2 used 0b10 - Repetition coding of 4 used 0b11 - Repetition coding of 6 used |
| } | | |
| } | | |

As shown in Table 5, each DL-MAP_IE includes a Downlink Interval Usage Code ("DIUC") indicating information for designating an offset of a region where the DL-MAP IEs are recorded, a Connection Identifier("CID") based on which each DL-MAP IE is allocated, an "OFDMA symbol offset" indicating an offset of symbol resources allocated to a DL burst, a "Subchannel offset" indicating an offset of subchannel resources allocated to a DL burst, a "Boosting" indicating a power value by which power is increased during power transmission, a "No. OFDMA Symbols" indicating the number of allocated OFDMA symbols, a "No. Subchannels" indicating the number of allocated subchannels, and a "Repetition Coding Indication" indicating information on a repetition code used for the burst.

Therefore, in step 422, the serving BS 450 transmits to the MS 410 a "DL-MAP" message including a DL-MAP IE in which selected channel information is stored, and a DIUC='13' indicating allocation of safety channels by the DL-MAP IE. In step 424, the serving BS 450 transmits a "SafetyCH-Alloc-Info" message with an Alloc flag='1' to the neighbor BS#1 460 indicating that the to safety channels provided by the neighbor BS#1 460 were allocated to the MS 410.

In step 424, the serving BS 450 transmits, to the neighbor BS#1 460, information indicating whether it has actually allocated the safety channels provided by the neighbor BS#1 460 to the MS 410. This is to determine whether the serving BS 450 has actually allocated the channels provided by the neighbor BS#1 460 to the MS 410 because the serving BS 450 may select other allocable channels when the serving cell cannot use the channels provided by the neighbor BS#1 460. In other words, the safety channels of neighbor BSs, actually unused in the serving cell, are returned to the neighbor BS#1460, so that the neighbor BS#1 460 can use the safety channels in determining the allocable safety channels for another MS.

The SafetyCH-Alloc-Info message can be with or after the DL-MAP message. The format of the SafetyCH-Alloc-Info message is illustrated in Table 6.

**Table 6**

| Syntax | Size | Notes |
|---|---|---|
| Global Header | 152 bits | |
| Alloc flag | 1 bit | Indicate whether the BS allocates safety channel zone which provided from other BS. 0: the BS cannot allocate the same channel zone which provided from other BS. 1: the BS allocates the same channel zone which provided from other BS. |
| MS unique identifier | 48 bits | 48bit unique identifier used by MS |
| TLV_Safety_channel_info | Variable | Safety channel zone information for case where Alloc flag value is set to 0. (the same format with TLV_Safety_channel_info in SafetyCH_Info message) |

As illustrated in Table 6, the SafetyCH-Alloc-Info message includes a plurality of IEs, i.e., a "MS unique identifier" indicating ID information of an MS allocated the safety channels, an "Alloc flag" indicating whether the serving BS has actually allocated the safety channels provided from the neighbor BS to the MS, and a "TLV_Safety_channel_info" indicating the safety channels to be allocated to the MS.

The MS unique identifier is included to inform a neighbor BS that the MS will perform safety channel handover to the neighbor BS and use safety channels of the serving BS, and to allocate a fast ranging period for the MS when the MS cannot be allocated the safety channels of the neighbor BS. Alloc flag='1' indicates that the serving BS has allocated the safety channels provided from the neighbor BSs to the MS, and Alloc flag='0' indicates that the serving BS has allocated its own safety channels to the MS so that the MS can use the safety channels after performing handover to the neighbor BS because it cannot allocate the safety channels provided from the neighbor BSs to the MS. Where the Alloc flag value is set to '0', the TLV_Safety_channel_info, is included to inform a neighbor BS of safety channels of the serving BS, allocated to the MS. The structure of the TLV_Safety_channel_info is shown in Table 3.

In step 426, upon receiving the DL-MAP message transmitted by the serving BS 450, the MS 410 communicates with the serving BS 450 using a channel for the DL-MAP IE bursts.

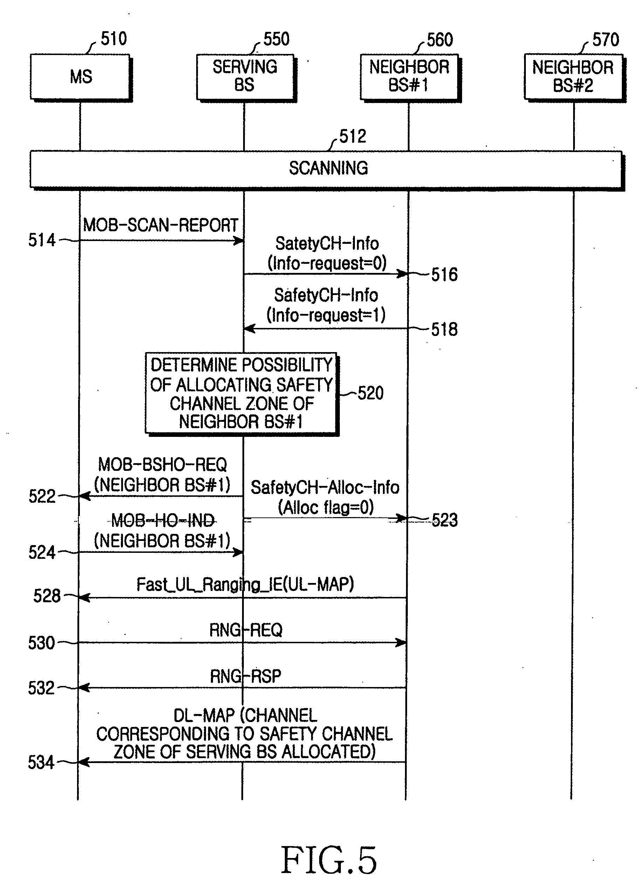

FIG. 5 is a signaling diagram illustrating an operating process of allocating safety channels by performing handover in a BWA communication system according to an embodiment of the present invention. Referring to FIG. 5, in step 512, an MS 510, while communicating with a serving BS 550 in a serving cell, scans its neighbor BSs, which include the serving BS 550, a neighbor BS#1 560 and a neighbor BS#2 570. In step 514, if there is any change in intensity of signals from the serving BS and the neighbor BSs as a result of the scanning, the MS 510 transmits the scanning result to the serving BS 550 using a "MOB-SCAN-REPORT" message. In step 516, upon receiving the "MOB-SCAN-REPORT" message, the serving BS 550 selects a neighbor BS having the highest reception signal intensity, i.e., the best channel condition, and transmits a "SafetyCH-Info" message after setting an Info-request to '0' to request allocable safety channel information from the neighbor BS. That is, in step 516, the serving BS 550 transmits the SafetyCH-Info message to the neighbor BS#1 560, which has the highest reception signal intensity.

In step 518, the neighbor BS#1 560 transmits, to the serving BS 550, a "SafetyCH-Info" message including the TLV_Safety_channel_info of Table 3 indicating its own safety channel information after setting an Info-request to '1'. In step 520, upon receiving the SafetyCH-Info message with Info-request='1', the serving BS 550 determines whether it can allocate its own safety channels of the neighbor BS#1 560 to the MS 510 through the safety channel information from the neighbor BS#1 560, included in the SafetyCH-Info message. If it is determined in step 520 that another MS is using the safety channels provided by the neighbor BS#1 560, the serving BS determines that it is impossible to allocate the channels to the MS 510. In step 522, the serving BS 550 transmits a Mobile BS Handover Request ("MOB-BSHO-REQ") message to the MS 510 thereby instructing the MS 510 to perform handover to the neighbor BS#1 560. The format of the MOB-BSHO-REQ message is shown in Table 7.

**Table 7**

| MOB-BSHO-REQ_Message_Format(){ | | |
|---|---|---|
| Management Message Type = 52 | 8 bits | |
| Handover Mode | 2 bits | 00: Network handover not supported 01: Network handover supported 10: safety channel handover 11: reserved |
| For(j=0; j<N_Recommended; j++) | | N_Recommended can be derived from the known length of the message |
| Neighbor BS-ID | 48 bits | |
| Service level prediction | 8 bits | |
| } | | |
| Temporary CID | 16 bit | Activated in case where Handover Mode value is set to 10 |
| HMAC Tuple | 21 bytes | See 11.4.11 |
| } | | |

As shown in Table 7, the MOB-BSHO-REQ message includes a plurality of IEs, i.e., a "Management Message Type" indicating the type of transmission message, a "Handover Mode" indicating a handover requited by the serving BS, a "Neighbor BS-ID" indicating information on target BSs selected by the serving BS, a "Temporary CID" indicating a temporary connection identifier, and a "HMAC Tuple" indicating a Hash-based Message Authentication Code (HMAC) Tuple.

The Handover Mode indicates whether a network assisted handover is performed or a safety channel handover is performed. The "N_Recommended" indicates the number of neighbor BSs selected by the serving BS as recommended target BSs. Further, the "N_Recommended" represents IDs for the neighbor BSs and information on a bandwidth and a service level that the neighbor BSs can provide to the MS. In addition, the MOB-BSHO-REQ message includes a Temporary CID that is activated when the Handover Mode indicates the safety channel handover, i.e., Handover Mode=' 10', and a HMAC Tuple for authentication of the MOB-BSHO-REQ message.

Therefore, the Handover Mode of the MOB-BSHO-REQ message transmitted in step 522 is set to the safety channel handover mode, i.e., '10'. In addition, the N_Recommended value becomes 1, and neighbor BS information indicated by the N_Recommended includes an ID of the neighbor BS#1 560. In step 524, after receiving the MOB-BSHO-REQ message, the MS 510 transmits a Mobile Handover Indication ("MOB-HO-IND") message in response to the MOB-BSHO-REQ message if the Handover Mode indicates a safety channel handover, and then performs handover to the neighbor BS#1 560 indicated by the N_Recommended field in the MOB-BSHO-REQ message. The format of the MOB-HO-IND message is shown in Table 8.

**Table 8**

| **Syntax** | **Size** | **Notes** |
|---|---|---|
| MOB-HO-IND_Message_Format(){ | | |
| **Management Message Type = 56** | 8 bits | |
| *Reserved* | 6 bits | Reserved; shall be set to zero |
| **HO_IND_type** | 2 bits | 00: Serving BS release 01: HO cancel 10: HO reject 11: reserved |
| **Target_BS_ID** | 48 bits | Applicable only when HO_IND-type is set to 00. |
| **HMAC Tuple** | 21 bytes | See 11.4.11 |
| } | | |

As shown in Table 8, the MOB-HO-IND message includes a plurality of IEs, i.e., a "Management Message Type" indicating the type of transmission message, a "HO_IND_type" indicating whether a MS has determined, canceled or rejected handover to a selected final target BS, a "Target_BS_ID" indicating an ID of a final target BS selected by the MS where the MS has performed handover, and a "HMAC Tuple" for authentication of the MOB-HO-REQ message.

If the MS has decided to perform handover to the final target BS, it sets the HO_IND_type to '00', if the MS has determined to cancel the handover, it sets the HO_IND_type to '01', or if the MS has determined to reject the handover, it sets the HO_IND_type to '10' before transmitting the HOB-HO-IND message. Upon receiving the MOB-HO-IND message with HO_INO_type='10', the serving BS 550 updates a recommended target BS list.

After transmitting the MOB-HO-IND message to the serving BS 550 in which the neighbor BS#1 560 is stored as a target BS, the MS 510 changes its connection to the neighbor BS#1 560.

In step 523, the serving BS 550 transmits to the neighbor BS#1 560 a "SafetyCH-Alloc-Info" message after setting Alloc flag to '0' to indicate that it cannot allocate the safety channels provided by the neighbor BS#1 560 to the MS 510 and the MS 510 will perform handover to the neighbor BS#1 560. The format of the SafetyCH-Alloc-Info message is shown in Table 6, and includes safety channel information of the serving BS itself. Step 523 can be performed before or after steps 522 and 524, or can be performed between steps 522 and 524.

In step 528, upon receiving the SafetyCH-Alloc-Info message, the neighbor BS#1 560 transmits an uplink (UL)-MAP message including a "Fast_UL_Ranging_IE" allocated to support fast UL ranging of the MS 510, recognizing from the message that the MS 510 will perform handover to the neighbor BS#1 560. The UL-MAP message includes parameters related to an uplink of the neighbor BS#1 560. The neighbor BS#1 560 transmits the "Fast_UL_Ranging_IE" to the MS 510 to minimize delay from the handover performed by the MS 510. The MS 510 can perform initial ranging with the neighbor BS#1 560 on a contention-free basis according to the Fast_UL_Ranging_IE. The format of the Fast_UL_Ranging_IE included in the UL-MAP message is shown in Table 9.

**Table 9**

| **Syntax** | **Size** | **Notes** |
|---|---|---|
| Fast_UL_Ranging_IE{ | | |
| MAC address | 48 bits | MS MAC address as provided on the RNG-REQ Message on initial system entry |
| UIUC | 4 bits | UIUC=15. A four-bit code used to define the type of uplink access and the burst type associated with that access. |
| OFDM Symbol offset | 10 bits | The offset of the OFDM symbol in which the burst starts, the offset value is defined in units of OFDM symbols and is relevant to the Allocation Start Time field given in the UL-MAP message. |
| Subchannel offset | 6 bits | The lowest index OFDMA subchannel used for carrying the burst, starting from subchannel 0. |
| No. OFDM Symbols | 10 bits | The number of OFDM symbols that are used to carry the UL Burst |
| No. Subchannels | 6 bits | The number OFDMA subchannels with subsequent indexes, used to carry the burst. |
| Reserved | 4 bits | |
| } | | |

The Fast_UL_Ranging_IE of Table 9 includes a (Medium Access Control) MAC address for an MS that will have ranging opportunities, a "UIUC" (Uplink Interval Usage Code) providing information on a field for recording a start offset value for the fast uplink ranging, an offset for a contention-free-based ranging opportunity period allocated to the MS 510, a "No. OFDM" symbols indicating the number of OFDM symbols, and a "No. subchannels" indicating the number of subchannels.

The MAC address of the MS 510 has been transmitted to the neighbor BS#1 560 through the "SafetyCH-Alloc-Info" message in step 523.

In step 530, after receiving the UL-MAP message, the MS 510 transmits a Ranging Request ("RNG-REQ") message to the neighbor BS#1 560 according to the "Fast_UL_Ranging_IE". In step 532, after receiving the RNG-REQ message, the neighbor BS#1 560 transmits, to the MS 510, a Ranging Response ("RNG-RSP") message including information for correction of frequency, time and transmission power for the ranging.

Therefore, the MS, 510 in communication with the serving BS 550, transmits the scanning result to the serving BS 550 to inform the BS 550 of a change in reception signal intensity. If the serving BS 550 fails to be allocated the safety channels from a neighbor BS, it allows the MS 510 to perform handover to the neighbor BS. Then the MS 510 communicates with the neighbor BS through the safety channels of the serving BS 550.

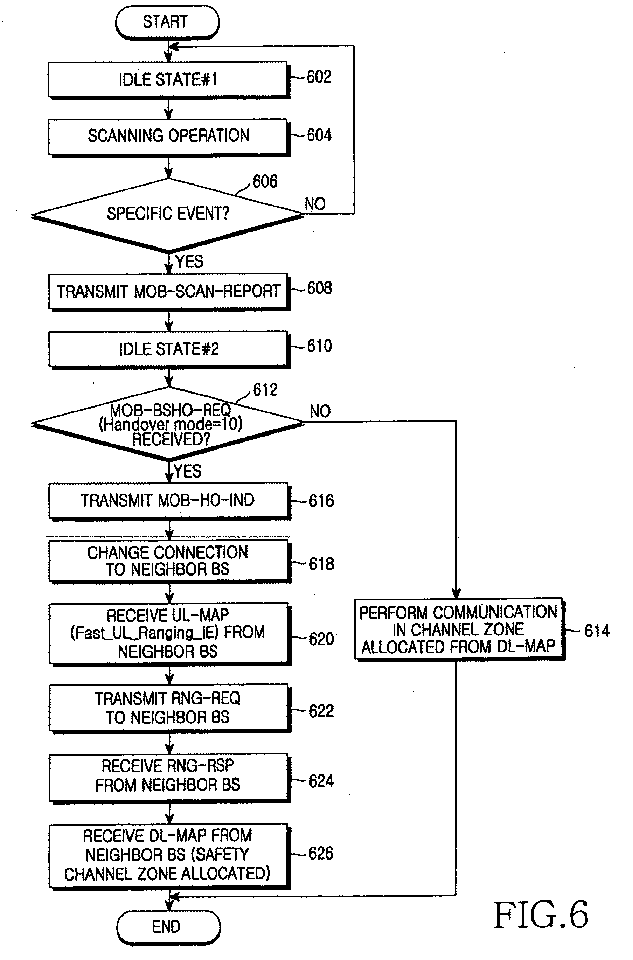

FIG. 6 is a flowchart illustrating an operating process of an MS for allocating safety channels in a BWA communication system according to an embodiment of the present invention. Referring to FIG. 6, in step 602, the MS is in an idle state #1. In step 604, the MS scans on a serving BS and neighbor BSs. In step 606, the MS determines whether there is any specific event, as a result of the scanning. For example, a change in signal intensity received from the serving BS and the neighbor BS or the case where the intensity of a signal received from the neighbor BS is higher than or equal to a predetermined threshold SafetyCH_Threshold. If the signal intensity from the neighbor BS is higher than or equal to the threshold SafetyCH_Threshold, the MS should be allocated the safety channels of a neighbor cell from the serving BS so that interference from the neighbor cell can be minimized.

Therefore, in step 606, the MS compares the intensity of a signal received from the neighbor BS with the threshold SafetyCH_Threshold. If the intensity of a signal received from the neighbor BS is higher than or equal to the threshold SafetyCH_Threshold, the MS proceeds to step 608. However, if the intensity of a signal received from the neighbor BS is lower than the threshold SafetyCH_Threshold, the MS returns to step 602 where it performs a general communication process with the serving BS, staying in the idle state #1.

In step 608, the MS transmits a MOB-SCAN-REPORT message to the serving BS. In step 610, the MS stays in an idle state #2, and then proceeds to step 612. The idle state #2 is not substantially different from the idle state #1, and is provided for a simple description of the present invention. In step 612, the MS determines whether a MOB-BSHO-REQ message with a Handover Mode=' 10' indicating a safety channel handover process has been received from the serving BS. Upon failure to receive the MOB-BSHO-REQ message with Handover Mode=' 10', the MS proceeds to step 614. However, upon receiving the MOB-BSHO-REQ message with Handover Mode='10', the MS proceeds to step 616.

In step 614, the MS communicates with the serving BS using channels allocated from DL-MAP and transmitted by the serving BS. The channels allocated from the DL-MAP can be either the safety channels of the neighbor BS or channels that were used for communication with the serving BS before receiving safety channel allocation information from the neighbor BS.

In step 616, the MS transmits a MOB-HO-IND message to the serving BS in response to the MOB-BSHO-REQ message. In step 618, the MS changes its connection to the target BS indicated by the MOB-HO-IND message, i.e., the neighbor BS with the highest reception signal intensity.

In step 620, the MS receives a UL-MAP message including Fast_UL_Ranging_IE from the neighbor BS. In step 622, the MS transmits a RNG-REQ message to the neighbor BS using a channel provided by the Fast_UL_Ranging_IE. In step 624, the MS receives a RNG-RSP message that the neighbor BS has transmitted in response to the RNG-REQ message. In step 626, the MS receives from the neighbor BS a DL-MAP message including channel information corresponding to safety channels of the serving BS. Thereafter, the MS performs communication with the neighbor BS on the safety channels.

Therefore, the MS, moving to the neighbor cell region recognizes that there is a change in intensity of the BS signal. Next, the MS is allocated safety channels from the serving BS. Alternatively, if the serving BS cannot allocate the safety channels, the MS performs handover to the neighbor BS and then performs communication with the neighbor BS using safety channels of the serving BS.

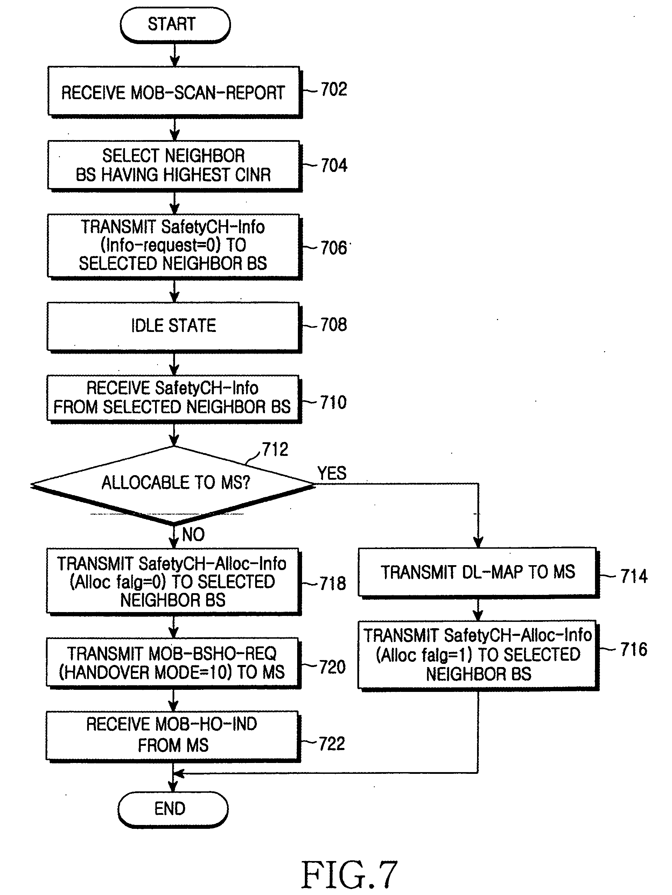

FIG. 7 is a flowchart illustrating an operating process of a serving BS for allocating safety channels in a BWA communication system according to an embodiment of the present invention. Referring to FIG. 7, in step 702, the serving BS receives a MOB-SCAN-REPORT message from an MS. In step 704, the serving BS selects a neighbor BS with the highest reception signal intensity based on the MOB-SCAN-REPORT message. In step 706, the serving BS transmits a SafetyCH-Info message, after setting an Info-request to '0', to send a request for safety channel information to the selected neighbor BS. In step 708, the serving BS stays in an idle state, and then proceeds to step 710. The idle state is a state in which the MS, the serving BS and the neighbor BSs are mutually communicated according to a general communication process until safety channel information is received from the selected neighbor BS.

In step 710, the serving BS receives a SafetyCH-Info message including safety channel information and an Info-request='1' from the selected neighbor BS. In step 712, the serving BS determines whether it can actually allocate the safety channels provided by the selected neighbor BS to the MS. If the serving BS can allocate its own safety channels provided by the neighbor BS to the MS, it proceeds to step 714, and if the serving BS cannot allocate the channels to the MS, it proceeds to step 718.

In step 714, the serving BS transmits a DL-MAP message to the MS in which serving cell safety channels of the neighbor BS are stored. In step 716, the serving BS transmits a SafetyCH-Alloc-Info message of Table 6 after setting Alloc flag to '1' to indicate that it has actually allocated channels corresponding to safety channels of the neighbor BS to the MS.

In step 718, the serving BS transmits the SafetyCH-Alloc-Info message with Alloc flag='0' to the neighbor BS. The SafetyCH-Alloc-Info message includes safety channel information of the serving BS. By setting the Alloc flag to '0', the serving BS indicates that it has failed to allocate safety channels of the neighbor BS and will allow the MS to perform handover to the neighbor BS. In addition, the serving BS indicates that it will allow the MS and the neighbor BS to perform communication with each other, using its own safety channels in the neighbor BS. The SafetyCH-Alloc-Info message includes an ID of an MS that will perform handover to the neighbor BS, and TLV_Safety_Channel_info indicating the safety channel information of the serving BS.

In step 720, the serving BS cannot allocate safety channels to the MS. Therefore, the serving BS transmits a MOB-BSHO-REQ message with Handover Mode=' 10' to perform safety channel handover to the neighbor BS. In step 722, the serving BS receives a MOB-HO-IND message from the MS in response to MOB-BSHO-REQ message. In this case, the serving BS recognizes that the MS will change its connection to the neighbor BS.

Therefore, the serving BS allocates channels corresponding to safety channels of the neighbor cell to the MS such that interference from the neighbor cell can be minimized for the MS approaching the neighbor cell. In addition, if the channels cannot be allocated to the MS, the serving BS allows the MS to perform handover to the neighbor BS.

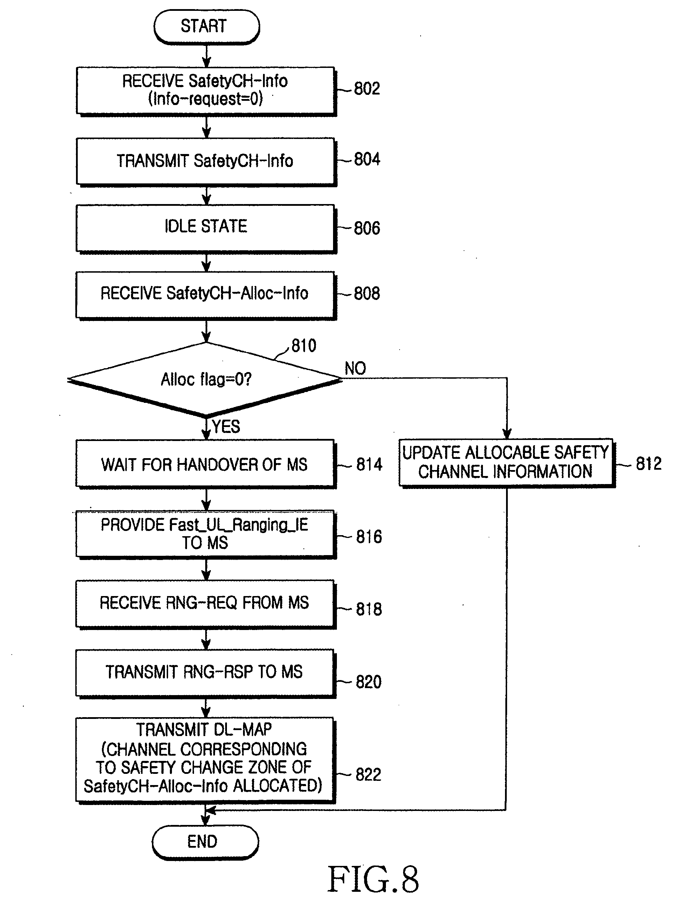

FIG. 8 is a flowchart illustrating an operating process of a neighbor BS for allocating safety channels in a BWA communication system according to an embodiment of the present invention. Referring to FIG. 8, in step 802, the neighbor BS, i.e., a neighbor BS having the highest reception signal intensity, receives from a serving BS, a SafetyCH-Info message with Info-request='0' indicating a request for safety channel allocation zone information. In step 804, the neighbor BS transmits a SafetyCH-Info message with Info-request='1' to the serving BS to indicate its own safety channels. In step 806, the neighbor BS stays in an idle state, and then proceeds to step 808. The idle state is where a general communication process in the neighbor BS is performed until channel allocation information is actually received from the serving BS.

In step 808, the neighbor BS receives a SafetyCH-Alloc-Info message from the serving BS. In step 810, the neighbor BS determines whether an Alloc flag value of the SafetyCH-Alloc-Info message is set to '0'. The Alloc flag value of the SafetyCH-Alloc-Info message indicates whether the serving BS has allocated, to an MS, the safety channels provided to the serving BS by the neighbor BS, included in the SafetyCH-Info message transmitted in step 804. If it is determined in step 810 that the Alloc flag value is set to '1', the neighbor BS proceeds to step 812 where it updates information on allocable safety channels, recognizing that the safety channels included in the SafetyCH-Info message of 804 have been allocated for the MS.

However, if it is determined in step 810 that the Alloc flag value is set to '0', the neighbor BS proceeds to step 814, recognizing that the safety channels included in the SafetyCH-Info message of step 804 have not been allocated for the MS. In step 814, the neighbor BS waits for safety channel handover with the MSS.

In step 816, the neighbor BS acquires synchronization with an MS corresponding to an MS ID included in the SafetyCH-Alloc-Info message received in step 808, and then transmits a UL-MAP message including a Fast_UL_Ranging_IE for fast ranging of the MS that has performed handover.

In step 818, the neighbor BS receives an RNG-REQ message from the MS. In step 820, the neighbor BS transmits an RNG-RSP message in response to the RNG-REQ message. In step 822, the neighbor BS performs the ranging process, and thereafter transmits a DL-MAP message including channel information for communication with the MS. The channels included in the DL-MAP message correspond to safety channels of the serving BS, included in the SafetyCH-Alloc-Info message transmitted in step 808 by the serving BS.

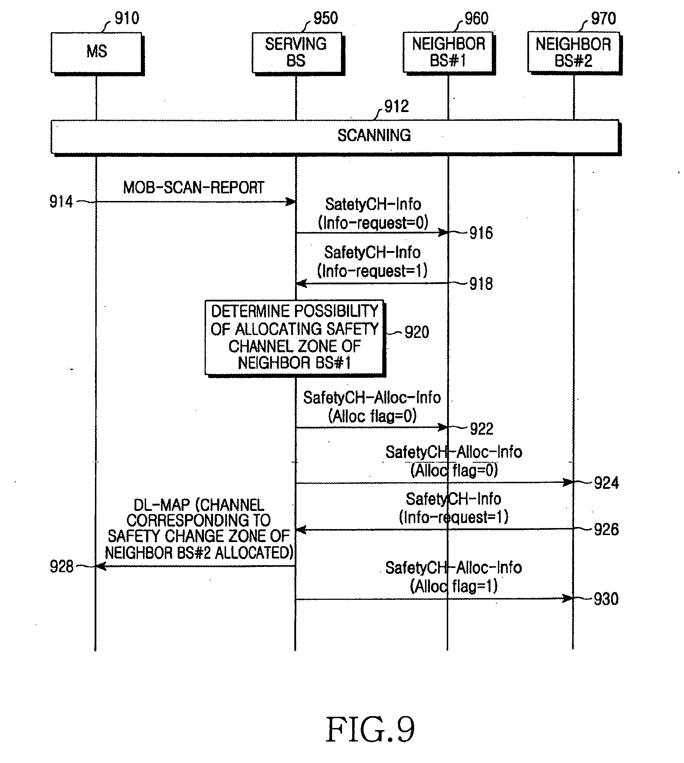

FIG 9 is a signaling diagram illustrating an operating process of allocating safety channels in a BWA communication system according to an embodiment of the present invention where the serving BS fails to allocate safety channels of the neighbor BS having the highest reception signal intensity to the MS, i.e., the case where the serving BS fails to allocate the safety channels to the MS in step 420 of FIG. 4 and step 520 of FIG. 5.

Referring to FIG. 9, in step 912, an MS 910, while communicating with a serving BS 950 in a serving cell, scans on its neighbor BSs, which include the serving BS 950, a neighbor BS#1 960 and a neighbor BS#2 970. In step 914, if there is any change in intensity of signals received from the serving BS and the neighbor BSs as a result of the scanning, the MS 910 transmits the scanning result to the serving BS 950 using a "MOB-SCAN-REPORT" message. In step 916, after receiving the "MOB-SCAN-REPORT"message, the serving BS 950 selects a neighbor BS having the highest reception signal intensity, and transmits a "SafetyCH-Info" message after setting an Info-request to '0' to send a request for safety channel information to the neighbor BS. In other words, the serving BS 950 transmits the SafetyCH-Info message to the neighbor BS#1 960, which has the highest reception signal intensity. In step 918, the neighbor BS#1 960 transmits, to the serving BS 950, a "SafetyCH-Info" message including TLV_Safety_channel_info indicating its own safety channel information after setting an Info-request to '1', in response to the safety channel information request from the serving BS. In step 920, upon receiving the SafetyCH-Info message, the serving BS 950 determines whether it can allocate its own channels corresponding to safety channels of the neighbor BS#1 960 to the MS 910, included in the SafetyCH-Info message. If another MS is using the channels, the serving BS proceeds to step 922, determining that it cannot allocate the channels to the MS 910.

In step 922, the serving BS 950 transmits a "SafetyCH-Alloc-Info" message with Alloc flag='0' to the neighbor BS#1 960 that has provided the channels, thereby indicating that it has failed to allocate the safety channels of the neighbor BS#1 960 to the MS 910.

In step 924, the serving BS 950 selects the neighbor BS#2 970 having the second highest reception signal intensity, and transmits a "SafetyCH-Alloc-Info" message with Alloc flag='0' to request safety channel information of the neighbor BS#2 970.

In step 926, after receiving the SafetyCH-Alloc-Info message, the neighbor BS#2 970 transmits, to the serving BS 950, the "SafetyCH-Info" message with Info-request='1' including safety channel information of the neighbor BS#2 970.

In step 928, the serving BS 950 transmits, to the MS 910, a "DL-MAP" message including channel information of the safety channels of the neighbor BS#2 970. In step 930, the serving BS 950 transmits, to the neighbor BS#2 970, a "SafetyCH-Alloc-Info" message of Table 6 after setting Alloc flag to '1' to indicate that it has actually allocated the safety channels of the neighbor BS#2 970 to the MS 910. If it is not possible to allocate channels corresponding to safety channels provided by the neighbor BS#2 970 to the MS 910, the serving BS 950 continues to perform communication using the currently allocated channels, suspending the operation of allocating safety channels. Alternatively, the serving BS 950 can instruct handover to the neighbor BS with the highest reception signal intensity as described with reference to FIG. 5.

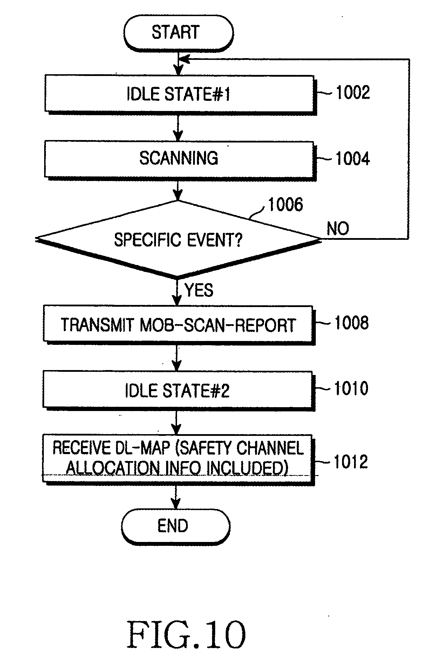

FIG. 10 is a flowchart illustrating an operating process of an MS for allocating safety channels in a BWA communication system according to an embodiment of the present invention. Referring to FIG. 10, in step 1002, the MS stays in an idle state #1. In step 1004, the MS scans a serving BS and neighbor BSs. In step 1006, the MS determines if there is any specific event, as a result of the scanning. For example, where there is a change in intensity of signals received from the serving BS and the neighbor BS, i.e., the case where the intensity of a signal received from the neighbor BS is higher than or equal to a predetermined threshold SafetyCH_Threshold.

If the intensity of a signal received from the neighbor BS is higher than or equal to the threshold SafetyCH_Threshold, the MS should be allocated safety channels of a neighbor cell from the serving BS so that interference from the neighbor cell can be minimized.

If it is determined in step 1006 that there is a specific event, the MS proceeds to step 1008 where it transmits a MOB-SCAN-REPORT message to the serving BS. However, if it is determined in step 1006 that there is no specific event, the MS returns to step 1002 where it performs a general communication process with the serving BS, staying in the idle state.

In step 1010, the MS stays in an idle state #2, and then proceeds to step 1012. In step 1012, the MS receives from the serving BS a DL-MAP message including channel information corresponding to safety channels of the neighbor BS, and performs communication with the serving BS using the allocated channels.

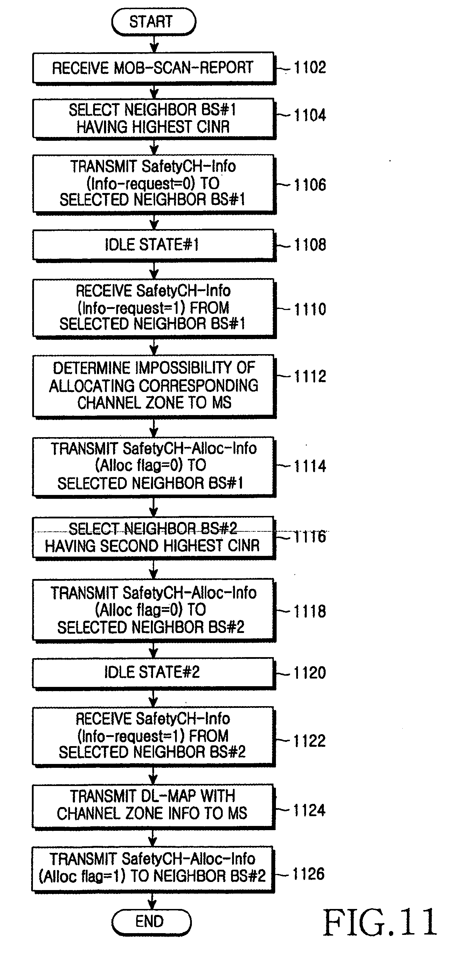

FIG. 11 is a flowchart illustrating an operating process of a serving BS for allocating safety channels in a BWA communication system according to an embodiment of the present invention. Referring to FIG. 11, in step 1102, the serving BS receives a MOB-SCAN-REPORT message from an MS. In step 1104, the serving BS selects a neighbor BS#1 having the highest reception signal intensity based on the MOB-SCAN-REPORT message.

In step 1106, the serving BS transmits a SafetyCH-Info message after setting an Info-request to '0' to send a request for safety channel information to the selected neighbor BS#1.

In step 1108, the serving BS stays in an idle state #1, and then proceeds to step 1110. In step 1110, the serving BS receives a SafetyCH-Info message with Info-request='1' including safety channel information from the neighbor BS#1. In step 1112, the serving BS determines whether it can actually allocate the safety channels provided by the selected neighbor BS#1 to the MS. If the serving BS can allocate the safety channels, it performs the operations described with reference to FIGs. 4 and 5. Therefore, if the serving BS is using the channels corresponding to the safety channels of the neighbor BS#1 for another MS, the serving BS proceeds to step 1114, determining that it cannot allocate its own channels corresponding to the safety channels provided by the selected neighbor BS#1. In step 1114, the serving BS transmits a SafetyCH-Alloc-Info message with Alloc flag='0' to the neighbor BS#1, thindicating it has failed to allocate the safety channels of the neighbor BS#1. In step 1116, the serving BS selects a neighbor BS#2 having the second highest reception signal intensity.

In step 1118, the serving BS transmits a SafetyCH-Alloc-Info message with Alloc flag='0' to the selected neighbor BS#2 to request safety channel information. In step 1120, the serving BS stays in an idle state #2, and then proceeds to step 1122. The idle state #2 is essentially equal to the idle state #1, and refers to a state where the MS, the serving BS and the neighbor BSs are mutually communicated according to a general communication process until the serving BS receives safety channel zone information form the selected neighbor BS#2.

In step 1122, the serving BS receives a SafetyCH-Info message with Info-request='1' including safety channel information from the selected neighbor BS#2. In step 1124, the serving BS transmits, to the MS, a DL-MAP message including channel information corresponding to safety channels of the neighbor BS#2.

In step 1126, the serving BS transmits, to the neighbor BS#2, a SafetyCH-Alloc-Info message of Table 6 with Alloc flag='1' indicating that it has allocated channels corresponding to safety channels provided by the neighbor BS#2 to the MS.

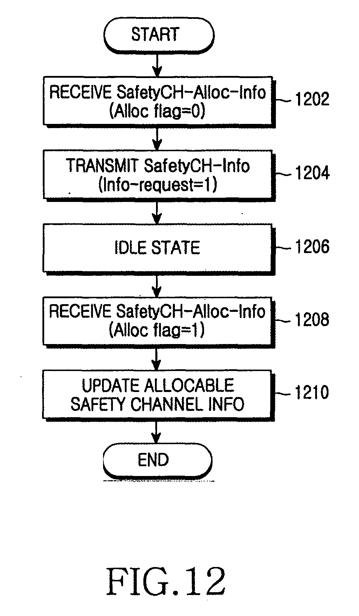

FIG. 12 is a flowchart illustrating an operating process of a neighbor BS for allocating safety channels in a BWA communication system according to an embodiment of the present invention. Referring to FIG. 12, in step 1202, the neighbor BS#2 having the second highest reception signal intensity, receives a SafetyCH-Alloc-Info message with Alloc flag='0' requesting safety channel allocation zone information from the serving BS. In step 1204, the neighbor BS#2 transmits to the serving BS a SafetyCH-Info message with Info-request='1' to provide its own safety channel information. In step 1206, the neighbor BS#2 stays in an idle state, and then proceeds to step 1208. The idle state refers to a state in which a general communication process is performed in the neighbor BS#2 until channel allocation information is actually received from the serving BS.

In step 1208, the neighbor BS#2 receives a SafetyCH-Alloc-Info message with Alloc flag='1' from the serving BS, and recognizes that the serving BS has allocated safety channels included in the SafetyCH-Info message to the MS. In step 1210, the neighbor BS#2 updates the allocable safety channel information.

An operation of the neighbor BS#1 in the signaling diagram of FIG. 9 is similar to an operation of a neighbor BS in the flowchart of FIG. 8.

With reference to FIG. 12, a description has been made of an operating process of the neighbor BS#2, in which a serving BS sends a safety channel information request to the neighbor BS#2 having the second highest reception signal intensity and allocates channels corresponding to safety channels received from the neighbor BS#2 to the MS.

However, if the serving BS cannot allocate channels corresponding to safety channels of the neighbor BS, it allows the MS to perform handover to the neighbor BS. The serving BS can allow the MS to perform handover not only to a neighbor BS having highest reception signal intensity but also to a neighbor BS having a reception signal intensity, for example, a carrier-to-interference and noise ratio (CINR), being higher than a threshold SafetyCH_Threshold. In this case, the serving BS can provide the neighbor BSs with handover information of the MS and safety channel information of the serving BS.

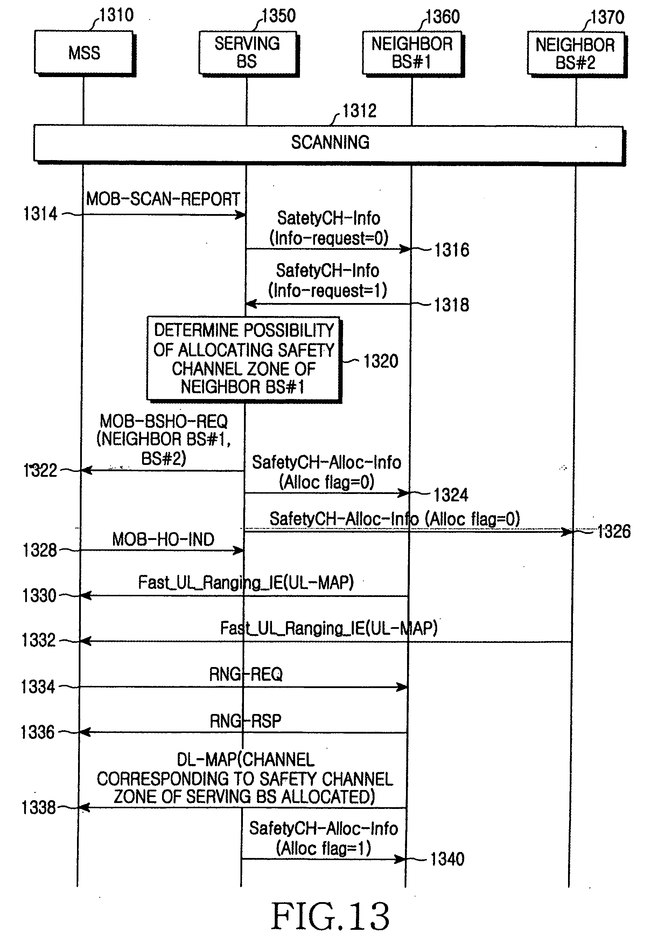

FIG. 13 is a signaling diagram illustrating an operating process of allocating safety channels in a BWA communication system according to an alternative embodiment of the present invention. Referring to FIG. 13, in step 1312, an MS 1310, while communicating with a serving BS 1350 in a serving cell, scans its neighbor BSs including the serving BS 1350, a neighbor BS#1 1360 and a neighbor BS#2 1370. In step 1314, if there is any change in intensity of signals received from the serving BS and the neighbor BSs as a result of the scanning, the MS 1310 transmits the scanning result to the serving BS 1350 using a "MOB-SCAN-REPORT" message.

In step 1316, upon receiving the MOB-SCAN-REPORT message, the serving BS 1350 selects a neighbor BS having the highest reception signal intensity, and transmits a "SafetyCH-Info" message after setting an Info-request to '0' to send a request for allocable safety channel information to the neighbor BS. In other words, the serving BS 1350 transmits the "SafetyCH-Info" message to the neighbor BS#1 1360, that has the highest reception signal intensity.

In step 1318, the neighbor BS#1 1360 transmits, to the serving BS 1350, a "SafetyCH-Info" message including TLV _Safety_channel_info indicating its own safety channel information after setting an Info-request to '1', in response to the safety channel information request from the serving BS 1350. In step 1320, the serving BS 1350 determines whether it can allocate its own safety channels of the neighbor BS#1 1360 to the MS 1310, included in the SafetyCH-Info message. If it is determined that another MS is using the safety channels, the serving BS determines that it cannot allocate the channels to the MS 1310.

In step 1322, the serving BS 1350 transmits a "MOB-BSHO-REQ" message to the MS 1310 thereby instructing the MS 1310 to perform handover, and then proceeds to step 1324 and 1326. The serving BS 1350 can select a neighbor BS having the highest reception signal intensity and a neighbor BS having a CINR being higher than SafetyCH_Threshold as handover candidate neighbor BSs. Therefore, if the neighbor BS#1 1360 and the neighbor BS#2 1370 have CINRs higher than SafetyCH_Threshold, the serving BS 1350 can include the neighbor BS#1 1360 and the neighbor BS#2 1370 in the MOB-BSHO-REQ message as handover candidate neighbor BSs.

In step 1324, the serving BS 1350 transmits a "SafetyCH-Alloc-Info" message with Alloc flag='0' to the neighbor BS#1 1360 to indicate that as the serving cell cannot allocate the safety channels to the MS 1310, the MS 1310 will perform handover to the neighbor BS#1 1360 selected as the handover candidate neighbor BS. Also, in step 1326, the serving BS 1350 transmits a "SafetyCH-Alloc-Info" message with Alloc flag='0' to the neighbor BS#2 1370 to indicate that as the serving cell cannot allocate the safety channels to the MS 1310, the MS 1310 will perform handover to the neighbor BS#2 1370 selected as the handover candidate neighbor BS.

In step 1328, after receiving the MOB-BSHO-REQ message, the MS 1310 transmits a "MOB-HO-IND" message in response to the MOB-BSHO-REQ message if the Handover Mode indicates the safety channel handover, and then proceeds to steps 1330 and 1332. The MS 1310 can use a reception signal intensity of a neighbor BS or a possible service level provided from the neighbor BS as a criterion for selecting a target BS. The MOB-HO-IND message transmitted in step 1328 does not necessarily have to include information on the finally selected neighbor BS.

The "SafetyCH-Alloc-Info" message transmitted from the serving BS 1350 includes safety channel information of the serving BS 1350 itself. The steps 1324 and 1326 can be performed before or after the steps 1322 and 1328, or can be performed between the steps 1322 and 1328.

In steps 1330 and 1332, upon receiving SafetyCH-Alloc-Info messages, the neighbor BS#1 1360 and the neighbor BS#2 1370 recognize that the MS 1310 included in their received messages will perform handover thereto. Further, the neighbor BS#1 1360 and the neighbor BS#2 1370 transmit UL-MAP messages each including Fast_UL_Ranging_IE to the MS 1310 to support fast uplink ranging of the MS 1310, and then proceeds to step 1334.

After transmitting the MOB-HO-IND message to the serving BS 1350, the MS 1310 changes its connection, i.e., performs handover, to the finally selected neighbor BS#1. For the handover, in step 1334, the MS 1310 receives a UL-MAP message transmitted by the neighbor BS#1 1360 and transmits an "RNG-REQ" message to the neighbor BS#1 1360 according to the Fast_UL_Ranging_IE.

In step 1336, the neighbor BS#1 1360 transmits an "RNG-RSP" message to the MS 1310 in response to the RNG-REQ message. After the ranging process, in step 1338, the neighbor BS#1 1360 transmits a "DL-MAP" message to allocate a channel zone corresponding to a safety channel zone of the serving BS 1350 to the MS 1310.

In step 1340, the neighbor BS#1 1360 transmits a "SafetyCH-Alloc-Info" message with Alloc flag='1' to inform the serving BS 1350 that it has allocated channels corresponding to safety channel zone to the MS 1310.

The neighbor BS#2 1370 that is allocating a Fast_UL_Ranging_IE, while waiting for handover of the MS 1310, cancels allocation of the Fast_UL_Ranging_IE, if the MS 1310 does not perform handover for a predetermined time, or, information indicating that the MS 1310 performs handover to another neighbor BS is received from the serving BS 1350.

Because the process in which a neighbor BS failed to be selected as a final target BS cancels allocation of the Fast_UL_Ranging_IE for the MS is not directly related to the the present invention, a detailed description thereof will be omitted. In the foregoing description of FIG. 13, if the serving BS fails to allocate the safety channels of the neighbor BS, the serving BS selects a plurality of handover candidate neighbor BSs based on the scanning result by the MS and allows the MS to perform handover to one of the neighbor BSs. Because the description of FIG. 13 is similar to the description of FIGs. 5 to 8, a detailed description of an individual operating process of the serving BS 1350, the neighbor BS#1 1360 and the neighbor BS#2 1370 will be omitted.

As can be understood from the foregoing description, the present invention proposes a safety channel allocation scheme capable of minimizing inter-cell interference for an MS located in a boundary of a neighbor cell and a safety channel handover operation based on channel conditions in an OFDMA communication system, thereby guaranteeing communication quality of the MS located in the cell boundary.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A method for allocating a safety channel in a broadband wireless access (BWA) communication system including a serving base station (BS) for providing a service to a mobile station (MS) and neighbor BSs, the method comprising the steps of:
upon receiving a request for allocation of the safety channel from the MS, sending a request for allocation of the safety channel to a target BS having the best channel condition among the neighbor BSs; and
after sending the request for allocation of the safety channel, upon receiving information indicating that the safety channel can be allocated, controlling the MS to perform communication through the allocated safety channel.

2. The method of claim 1, wherein the channel condition is measured by the MS using an intensity of a signal received from each BS.

3. The method of claim 1, wherein the MS performs communication using the safety channel of the target BS.

4. The method of claim 1, further comprising the step of transmitting by the serving BS, to the target BS, information indicating whether the serving BS has allocated the safety channel.

5. The method of claim 1, further comprising the step of, if the target BS having the best channel condition cannot allocate the safety channel, selecting a neighbor BS having the next best channel condition and sending a request for allocation of the safety channel to the selected neighbor BS.

6. A method for allocating a safety channel in a broadband wireless access (BWA) communication system including a serving base station (BS) for providing a service to a mobile station (MS) and neighbor BSs, the method comprising the steps of:
upon receiving a request for allocation of the safety channel from the MS, sending a request for allocation of the safety channel to a target BS having the best channel condition among the neighbor BSs; and
after sending the request for allocation of the safety channel, upon receiving information indicating that the safety channel cannot be allocated, controlling the MS to perform handover from the serving BS to the target BS.

7. The method of claim 6, wherein the channel condition is measured by the MS using an intensity of a signal received from each BS.

8. The method of claim 6, further comprising the step of receiving, by the MS , a safety channel allocated from the serving BS after performing handover, and performing communication with the target BS.

9. The method of claim 6, wherein the MS performs fast ranging with the target BS, when performing handover.

10. The method of claim 6, wherein the MS, when performing handover, selects a plurality of handover candidate neighbor BSs, and the MS selects one of the handover candidate neighbor BSs as a target BS and performs handover to the target BS.

11. The method of claim 10, wherein the step of selecting, by the MS, a plurality of handover the handover candidate neighbor BSs comprises the step of selecting neighbor BSs having a reception signal intensity higher than a predetermined value.

12. A system for allocating a safety channel in a broadband wireless access (BWA) communication system including a serving base station (BS) for providing a service to a mobile subscriber station (MS) and neighbor BSs, the system comprising:
the serving BS for, upon receiving a request for allocation of the safety channel from the MS, sending a request for allocation of the safety channel to a target BS having the best channel condition among the neighbor BSs, and upon receiving information indicating possibility of allocating the safety channel from the target BS, controlling the MS to perform communication through the allocated safety channel; and
the MS for, upon detecting a need for receiving a safety channel, sending, to the serving BS, information indicating that the MS should be allocated the safety channel, and receiving a safety channel allocated according to a control signal from the serving BS.

13. The system of claim 12, wherein the channel condition is measured by the MS using an intensity of a signal received from each BS.

14. The system of claim 12, wherein MS performs communication using a safety channel of the target BS.

15. The system of claim 12, wherein the serving BS transmits, to the target BS, information indicating whether the serving BS has allocated a safety channel through which the serving BS performs communication with the MS.

16. The system of claim 12, wherein if the target BS having the best channel condition cannot allocate the safety channel, the serving BS selects a neighbor BS having the next best channel condition and sends a request for allocation of the safety channel to the selected neighbor BS.

17. A system for allocating a safety channel in a broadband wireless access (BWA) communication system including a serving base station (BS) for providing a service to a mobile subscriber station (MS) and neighbor BSs, the system comprising:
the serving BS for, upon receiving a request for allocation of the safety channel from the MS, sending a request for allocation of the safety channel to a target BS having the best channel condition among the neighbor BSs, and upon receiving information indicating impossibility of allocating the safety channel from the target BS, controlling the MS to perform handover to the target BS; and
the MS for, upon detecting a need for receiving the safety channel, sending, to the serving BS, information indicating that the MS should be allocated the safety channel, and performing handover from the serving BS to the target BS according to a control signal from the serving BS to receive an allocated safety channel.

18. The system of claim 17, wherein the channel condition is measured by the MS using an intensity of a signal received from each BS.

19. The system of claim 17, wherein the MS is allocated a safety channel from the serving BS after performing handover, and performs communication with the target BS using the allocated safety channel.

20. The system of claim 17, wherein the MS performs fast ranging with the target BS to perform handover.

21. The system of claim 17, wherein the MS selects a plurality of handover candidate neighbor BSs, selects one of the handover candidate neighbor BSs as a target BS, and performs handover to the selected neighbor BS.

22. The system of claim 21, wherein the MS selects neighbor BSs having a reception signal intensity higher than a predetermined value in selecting target BSs among the handover candidate neighbor BSs.
